Europäisches Patentamt

European Patent Office

Office européen des brevets

(19)

(11) EP 1 199 195 A2

(12) **EUROPEAN PATENT APPLICATION**

(43) Date of publication:
**24.04.2002 Bulletin 2002/17**

(51) Int Cl.7: **B60G 9/00**

(21) Application number: **01123503.3**

(22) Date of filing: **28.09.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **20.10.2000 JP 2000321287
08.12.2000 JP 2000373879**

(71) Applicant: **Nissan Motor Co., Ltd.**
**Yokohama-shi, Kanagawa (JP)**

(72) Inventors:
• **Hosotani, Takeshi**
 **Hachiouji-shi, Tokyo (JP)**
• **Okano, Kimihiko**
 **Akishima-shi, Tokyo (JP)**

(74) Representative: **Weber, Joachim, Dr.**
 **Hoefer, Schmitz, Weber & Partner**
 **Patentanwälte**
 **Gabriel-Max-Strasse 29**
 **81545 München (DE)**

(54) **Axle linkage for industrial vehicle**

(57) An axle 1 is supported free to swing and displace in the left and right direction by a long hole 7 and swing axis 5 relative to a vehicle frame 6. The lower end is connected to the axle 1 so that it is free to displace in the left and right directions of the vehicle, and the vehicle frame 6 and axle 1 are connected by a control link 20. The control link 20 comprises an inclined first link 25 which connects the vehicle frame 6 and axle 1, a second link 30 which connects an intermediate point of the first link 25 and the axle 1, and a third link 36 which connects the connecting point of the first link 25 on the axle 1 side and a supporting member formed in one piece with the vehicle frame 6. The control link 20 varies the inclination angle of the first link 25 according to the relative displacement to lateral directions of the axle 1 and vehicle frame 6, and thereby controls the posture of the vehicle.

FIG.1

**Description**

FIELD OF THE INVENTION

The present invention relates to an axle supporting structure for industrial vehicles, and in particular, to an axle supporting structure suitable for industrial vehicles such as a fork lift truck with a large axle relative to load variation.

BACKGROUND OF THE INVENTION

In general, in an industrial vehicle such as a fork lift truck, the front wheel axle body is fixed relative to the body and the rear wheel axle can swing relative to the body. The tracking characteristics of the drive wheels on a road surface are thereby improved.

However, if a roll moment acts when the fork lift truck (vehicle) turns, the body will tend to tilt to right or left. A method of generating a restoring moment which opposes the roll moment relative to the rear axle, and enhances the stability of the vehicle during turning, is disclosed in " Toyota Fork Lift Truck Parts catalog 5FG 20, 23, and 25, 5FD 20, 23, and 25" (Toyota Motor Corp. TOYOTA AUTOMATIC LOOM WORKS, LTD. 1989, September, Catalog NO.5G111-891).

In this swing restricting device, an elastic member is interposed between the rear wheel axle and the vehicle frame. When the body tends to tilt to the outside due to centrifugal force when the vehicle turns, this elastic member arranged on the rear wheel axle supports the vehicle so that the body does not tilt too much.

However, it is usually difficult to obtain satisfactory suppression of both the swing motion in the roll direction when the vehicle is running, and the tilt of the body during the turning.

A swing controller which temporarily stops the swing function of the rear wheel axle when the vehicle is making a turn, is proposed for example in Japanese Patent publication JPA11-130397, and introduced in the catalog of Toyota Motors "GENEO 1 - 3.5ton Engine Fork Lift Truck" (July, 1998) and "REPAIR MANUAL 7FG 10..30, 7FD 10..30, 7FGK 20..30 ....)".

In these devices, the vehicle frame and rear wheel axle are connected by a cylinder, the extension and contraction of the cylinder are locked, and their mutual motion is fixed when the vehicle turns.

However, in this method, both the front wheel and rear wheel become rigid if the road surface on which the vehicle is turning is uneven, and the vehicle posture becomes somewhat unstable. Moreover, various kinds of sensors and controllers for detecting the swing state of the vehicle are required, and the system is complex.

SUMMARY OF THE INVENTION

It is therefore an object of this invention to provide an axle supporting structure for industrial vehicles which can suppress a change of vehicle posture during a turn of the vehicle or on a sloping surface.

In order to achieve above the object the invention provides an axle supporting structure for industrial vehicles, comprising an axle supporting wheels, the axle being supported free to swing in its center part relative to the vehicle frame and free to displace in the left and right directions, a first link, one end of the first link being connected to the axle so that it is free to displace in the left and right directions of the vehicle, the other end being connected to the vehicle frame so that it is free to displace in the left and right directions of the vehicle, and the link being inclined, a second link, one end of the second link being connected to the center point of the first link, the other end being connected to one of the axle and vehicle frame, and the link being inclined, and a third link, one end of the third link being connected to the other end of the first link, its other end being connected to one of the vehicle frame and the axle, and the link being disposed substantially parallel to the axle, wherein: the inclination angle of the first link varies according to the relative positions of the axle and vehicle frame to the left and right of the vehicle, and the vehicle posture is thereby controlled.

The details as well as other features and advantages of the invention are set forth in the remainder of the specification and are shown in the accompanying drawings.

BRIEF DESCRIPTION OF THE DRAWINGS

Fig. 1 is a schematic rear view of the axle supporting structure for industrial vehicles showing an embodiment of this invention.

Fig. 2 is plan view of part of an axle and a control link.

Fig. 3 is a plan view showing part of the control link.

Fig. 4 is a rear view showing other examples of the swing shaft supporting structure of this invention.

Fig. 5 is a schematic rear view showing a modification of the axle supporting structure for industrial vehicles of Fig. 1.

Fig. 6 is a plan view of part of the axle and control link of Fig. 5.

Fig. 7 is a sectional drawing showing an example of a shock absorbing device.

Fig. 8 is a schematic rear view showing yet another modification of the axle supporting structure for industrial vehicles shown in Fig. 1.

Fig. 9 is a schematic rear view showing an example wherein the left/right arrangement of the axle supporting structure for industrial vehicles shown in Fig. 1 is modified.

Fig. 10 is the schematic rear view showing an example wherein the vertical layout of the axle supporting structure for industrial vehicles shown in Fig. 1 is modified.

Fig. 11 is a schematic rear view of the axle supporting structure for industrial vehicles showing another embodiment of this invention.

Fig. 12 is a schematic rear view showing a modification of the axle supporting structure for industrial vehicles shown in Fig. 11.

Fig. 13 is a schematic rear view showing another modification of the axle supporting structure for industrial vehicles shown in Fig. 11.

Fig. 14 is a schematic rear view showing another modification of the axle supporting structure for industrial vehicles shown in Fig. 11.

Fig. 15 is a schematic rear view of the axle supporting structure for industrial vehicles showing yet another embodiment of this invention.

Fig. 16 is a plan view showing another example of the arrangement of a front/rear link of this invention.

Fig. 17 is a plan view showing another example of the arrangement of the front/rear link of this invention.

Fig. 18 is a schematic rear view of the axle supporting structure for industrial vehicles showing yet another embodiment of this invention.

Fig. 19 is a schematic rear view showing the operation state of the axle supporting structure for industrial vehicles shown in Fig. 18.

Fig. 20 is a vector diagram showing the force acting on the control link of Fig. 18.

PREFERRED EMBODIMENTS OF THE INVENTION

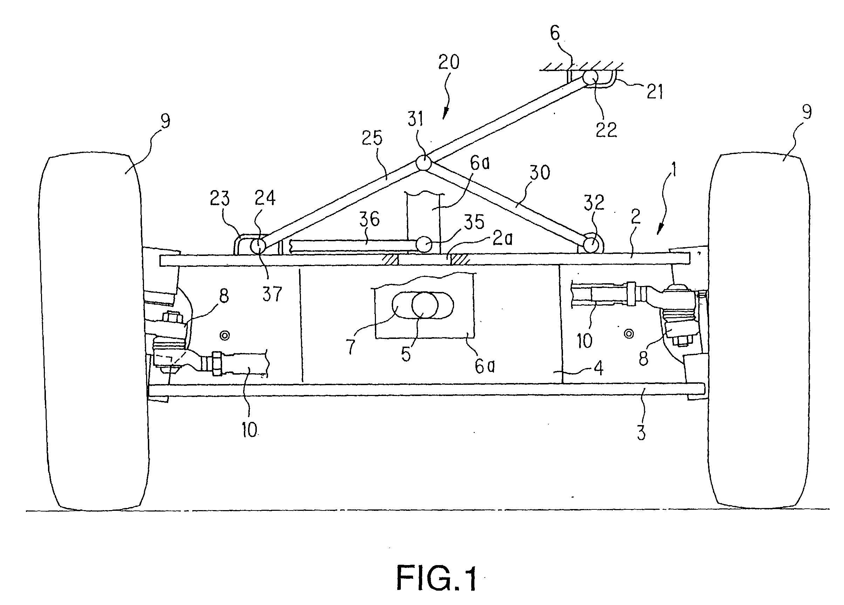

A first embodiment of this invention is hereafter described in Fig. 1 - Fig. 3.

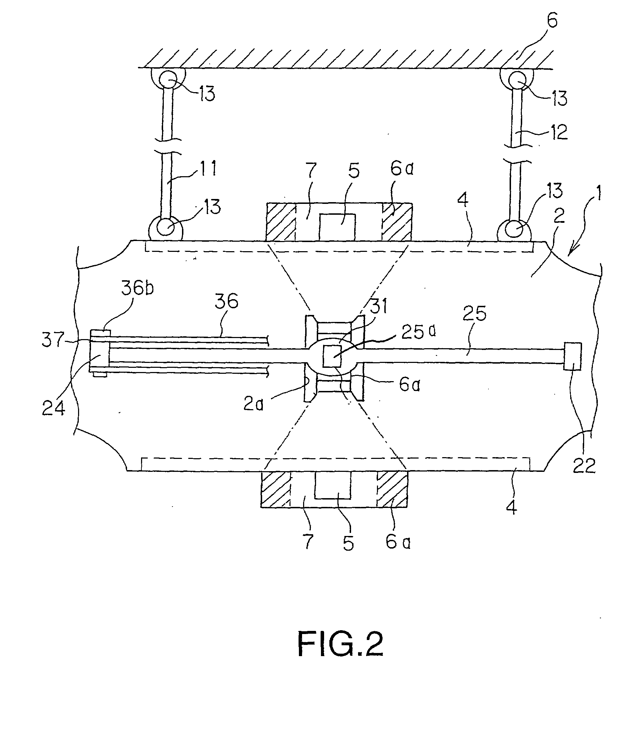

Fig. 1 is a rear view of a fork lift truck showing mainly the wheel axle and control link. Fig. 2 is a plan view of part of rear wheel axle and a control link.

In Fig. 1, a rear wheel axle 1 (hereafter, axle) comprises a parallel upper member 2 and lower member 3 connected by a connection member 4.

In the center part of the connecting member, a swing shaft 5 is provided which extends in the front/rear direction of the vehicle. From the vehicle frame 6 whereof only a part is shown, a longitudinal slot 7 is formed in the left/right direction in a supporting member 6a which extends downwards, the swing shaft 5 being inserted in the slot 7 such that it is free to displace. The load of the body acts on the axle 1 through this swing shaft 5.

The axle 1 can swing in the roll direction relative to the vehicle frame 6 around the swing shaft 5. However, the front wheel axle which supports the front wheels, not shown, is attached fixed to the vehicle frame. Therefore, the front wheel axle does not perform any swing motion relative to the vehicle frame.

At the left and right ends of the upper member 2 and lower member 3 of the axle 1, a steering knuckle 8 is supported via a king pin, not shown. The steering wheel 9 is supported by this steering knuckle 8.

A steering linkage 10 which moves according to a steering operation from a steering handle, not shown, is connected with the steering knuckle 8, and the travelling direction of the vehicle is varied by freely changing the orientation of the steering wheel 9.

Generally, in a fork lift truck, the direction of the front wheels does not change, but the direction of the rear wheels changes to freely change the direction of travel.

A control link 20 is attached to the upper surface of the axle 1 which connects the axle 1 to the vehicle frame 6.

The control link 20 comprises a first link 25, second link 30 and third link 36. One end 22 (hereafter, connecting point) of the first link 25 is inserted in a slot 21 provided in the vehicle frame 6. The other end 24 (hereafter, also connecting point) of the first link 25 is inserted in the slot 23 provided horizontal with the upper surface of the upper member 2 of the axle 1. The first link 25 inclines, and the ends 22, 24 are arranged so that there is point symmetry across the center of the vehicle.

The center section of the first link 25 is located in a vehicle center part, and an end 31 (hereafter, a connecting point) of the second link 30 is connected free to rotate via a pin, not shown. Another end 32 (hereafter, a connecting point) of the second link 30 is connected with an upper member 2 of the rear wheel axle 1 free to rotate via a pin, not shown. At this time, the connecting point 32 to the upper member 2 of the second link 30 and the connecting point 22 to the vehicle frame 6 of the first link 25 are arranged so that they are in the vicinity of same horizontal position.

One end 37 (hereafter, an connecting point) of the third link 36 which extends horizontally connects with the other end 24 on the side of the axle 1 of the first aforesaid link 25 via a pin, not shown. The other end 35 (hereafter, a connecting point) of the third link 36 is connected free to rotate via a pin, not shown, relative to the supporting member 6a which is connected to the vehicle frame 6 located in the center of the vehicle.

The connecting point 35 relative to the supporting member 6a of the third link 36 is situated immediately above the swing shaft 5.

Fig. 2 is a view of the control link 20 from above. A hole 25a is provided in the center part of the first link 25, as shown here, and the end 31 of the second link 30 is inserted in this hole 25a, these elements being mutually connected by a pin, not shown, in this state. The third link 36 is formed of a pair of parallel links, the other end 24 of the first link 25 is inserted in the parallel links, and they are interconnected by a pin 36b at the connecting point 37.

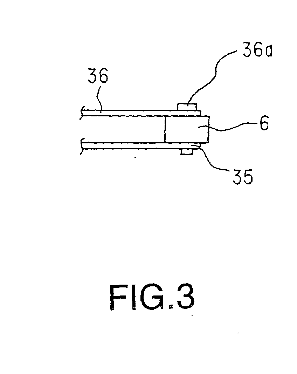

They are also interconnected at the end 35 of the third link 36 between these parallel links and with the supporting member 6a gripped between them via a pin 36a, as also shown in Fig. 3.

The axle 1 is connected with the vehicle frame 6 via connecting links (connecting members) 11, 12 extending in the front/rear direction of the vehicle, as shown in Fig. 2. A swivel joint 13 is respectively arranged in each connecting part. The links 11, 12 are parallel to each other, are symmetrical to the left and right of the swing shaft 5 and are arranged at the same height as the swing shaft 5.

Therefore, for both movement in the front/rear direction and a swing motion around the yawing axis (axis perpendicular to the plane of Fig. 2) of the axle 1 is restrained by the front/rear links 11 and 12. Movement in the vertical direction and swing motion around the left/right axis is also restrained by the engagement of the slot 7 of the supporting member 6a connected to the vehicle frame 6, and the swing shaft 5. However, movement in the left/right direction of the axle 1 and swing motion around the left/right axis (swing motion centered on the swing shaft 5) of are permitted.

In order to prevent interference with a part of the vehicle frame 6 which has the connecting point 35 of the third link 36, an opening 2a is provided (Fig. 1, Fig. 2) in the upper member 2 of the axle 1.

Although not shown, for the connecting point 24 of the first and third links 25, 36, a block which can slide to the left and right may be provided on the side of the axle 1, and the first and third links 25, 36 joined to this block.

Next, the motion of the control link 20 will mainly be described for different running states of the vehicle.

[Travelling straight forward]

On a flat road surface with no imperfections, the left and right drive wheels 9 run on the same road surface, the axle 1 is kept horizontal, and the control link 20 maintains the state shown in Fig. 1.

When there are bumps in the road surface, for example if the right wheel 9 rides over a bump, the axle 1 swings in an anticlockwise direction and tilts.

The swing axis 5 rises, so the vehicle frame 6 also moves up.

When the axle 1 swings and tilts, the control link 20 also swings in the same direction, and the connecting point 22 of the first link 25 to the vehicle frame 6 moves upwards.

Due to the tilt of the axle 1, a component force in the axle direction which is a reaction to the contact with the ground acting on the drive wheels 9 is produced. The swing axis 5 displaces to the left and right inside the slot 7 of the supporting member 6a, and due to this component force, the axle 1 moves to the left or right in the figure relative to the vehicle frame 6.

Due to the movement of the axle 1 to the right, the connecting point 32 of the second link 30 separates from the connecting point 24 of the first, third links 25, 36. Consequently, the inclination of the first link 25 becomes less. At this time, the connecting point 22 of the first link 25 displaces to the right of the figure in the slot 21 in the horizontal direction, and the connecting point 24 displaces to the left of the figure in the slot 23.

Therefore, the upward motion amount of the connecting point 22 of the first link 25 and the upward motion amount of the swing axis 5 in the middle of the axle 1 due to the tilt of the axle 1, can be made approximately the same, and the vehicle body rises while remaining horizontal. In other words, a change in the posture of the vehicle is prevented.

Conversely to the above, if the left wheel 9 rides over a bump, the control link 20 swings in a clockwise direction together with the axle 1, and the connecting point 22 of the first link 25 tends to move downwards. However, due to the displacement of the axle 1 to the left of the figure, the first link 25 moves upwards, and its inclination increases. As a result, the connecting point 22 can be made to move up to the same extent as the swing axis 5, and the vehicle body can be maintained horizontal.

When the axle 1 is swinging, the front/rear link 11,12 in Fig. 2 swings downwards, and the right front/rear link swings upwards. Due to the swing of these front/rear links 11, 12, the axle 1 moves slightly towards the front of the vehicle, however this movement can be reduced by making the length of the front/rear links 11, 12 sufficiently long.

[When the vehicle turns]

When for example the vehicle turns to the left, as shown in Fig. 1, a centrifugal force due to the turning axle acts towards the right of the figure on the vehicle frame 6, and this centrifugal force pulls the connecting point 24 of the first link 25 on the side of the axle 1 towards the right of the figure via the third link 36.

However the axle remains same position, the connecting point 32 is kept at the same point, the first link 25 tends to raise , i.e., the inclination angle of the first link 25 increases, and the connecting point 22 of the first link 25 on the side of the vehicle frame 6 tends to be pushed upwards.

The force pulling the connecting point24 to the right increases in direct proportion to the centrifugal force. Consequently, it cancels the moment tending to make the vehicle frame 6 tilt outside the turn in direct proportion to the centrifugal force.

Due to this force, the tilt of the vehicle outside (hereafter, referred to as outside tilt) due to centrifugal force when the vehicle turns is suppressed, so stability of vehicle posture is improved.

Here, a force **F** exerted by the first link 25 on the vehicle frame 6 may be calculated as follows. If the force acting in a lateral direction on the connecting point 24 of the first link 25 towards the axle due to centrifugal force is **F1** and the inclination angle of the first link 25 is theta:

$$F = F1 \times \tan \theta$$

Further, if the distance of the connecting point 22 of the first link 25 to the vehicle frame 6 from the center of the vehicle is n, the restoring moment M acting on the vehicle frame 6 is:

$$M = F \times n = F1 \times n \times \tan \theta$$

In other words, an optimum restoring moment can be obtained by suitably setting the inclination angle θ of the first link 25 and the position n of the connecting point 22 of the first link 25 to the vehicle frame 6.

When the vehicle turns in a reverse direction to the above, i.e., when it turns to the right and the centrifugal force therefore acts towards the left of the figure, the tilt angle of the first link 25 decreases. Consequently, the connecting point 22 of the first link 25 is pulled down. The vehicle body tends to tilt outside the turn due to the centrifugal force, and the inside of the turn with the connecting point 22 tends to float up. However, the connecting point 22 inside the turn is pulled down, so the tilt of the vehicle body is prevented.

The downward pulling force at this time may be treated in the same way as the force **F** which is an upward pushing force.

Next, the case will be described where for example the rear wheels of the vehicle encounter a bump in the road surface when the vehicle is turning to the left.

As described above, the vehicle frame 6 is subject to an upward force from the first link 25, and if the left rear wheel 9 rides over a bump, the axle 1 swings in a clockwise and moves left side.

At this time, the connecting point 32 of the second link 30 on the side of the axle 1 approaches the connecting point 24 of the first, third links 25, 36, and the tilt angle of the first link 25 increases. As a result, the upward movement of the connecting point 22 of the first link 25 increases, and the tilt of the vehicle in a clockwise direction is suppressed.

Also, the connecting point 22 of the first link 25 relative to the vehicle frame 6 moves to the left in the slot 21 and applies an upward force to the vehicle frame 6 at a new position.

Therefore, even during such a turn, as the axle 1 swings following the road surface, the vehicle is prevented from tilting outside the turn which would lead to an unstable posture, and there is no loss of comfort in riding the vehicle.

If the right wheel 9 rides over a bump when the vehicle is making a left turn, the axle 1 and control link 20 swing in an anticlockwise direction. When this occurs, the connecting point 32 of the second link 30 separates from the connecting point 24 of the first, third links 25, 36 conversely to the above, the inclination angle of the first link 25 decreases, and the tilt of the vehicle is suppressed in the same way as described above.

It can easily be appreciated also that when the vehicle is traveling over a bad road with many surface imperfections while it is turning, since the wheels move up or down according to the surface infections, the axle 1 and control link 20 swing, and the tilt of the vehicle body is suppressed in the same way as described above.

[Action and loading on a left or right sloping road]

The case will now be described where the vehicle tilts to the right or left, for example on a road surface which is sloping downwards towards the right. As the road surface slope slopes downwards relative to the forward direction of the vehicle, in Fig. 1, in the same way as described for the left-hand turn, the vehicle frame 6 moves slightly to the right relative to the axle 1, and the connecting point 24 of the first link 25 on the side of the axle is pulled to the right of the figure via the third link 36. As a result, the first link 25 moves upwards, and the connecting point 22 on the side of the vehicle frame 6 tends to be pulled upwards.

This action restores the posture of the vehicle which was inclined to the right, back to the horizontal, the center of gravity of the vehicle is returned to the left and the stability (so-called degree of stability) relative to tipping over is improved.

On a road surface sloping down towards the left, the vehicle frame 6 moves to the left, the inclination angle of the first link 25 decreases and the connecting point 22 is pulled downwards, so the tilt of the vehicle can be reduced, and stability to tipping over is enhanced in the same way as above.

The above effects are particularly marked when the center of gravity is high, for example when the vehicle is handling a load in a high position.

A further advantage is that sensors for detecting the slope of the road are not required.

Next, another embodiment will be described.

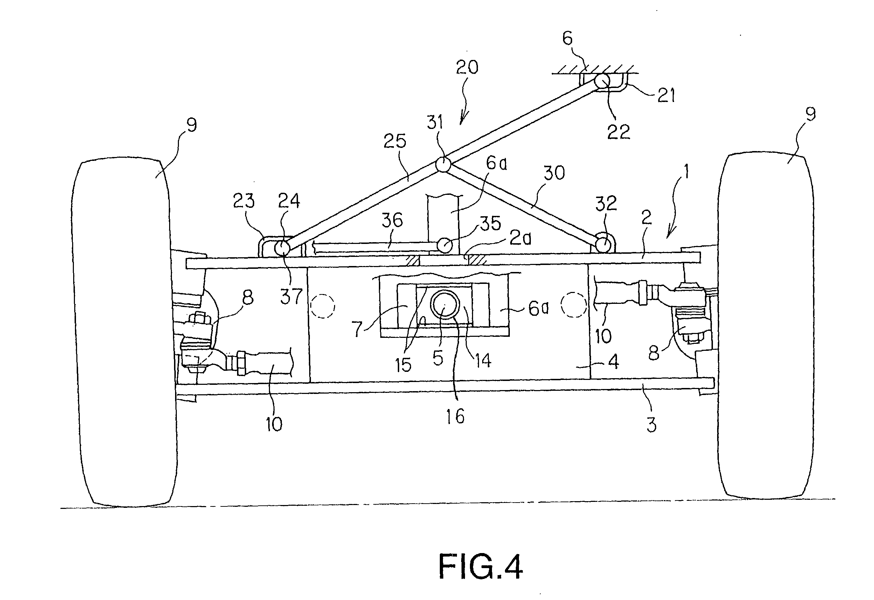

In Fig. 4, the swing axis 5 is supported on a block 14 provided free to slide in the slot 7 of the supporting member 6a.

In this case, it is preferred that a low friction member 15, e.g. "OILES #2000" (Trademark of the OILES Co;), is disposed on the upper and lower surfaces of the block 14 which slides in slot 7 so as to reduce the sliding resistance, and the provision of a bush 16 between the swing axis 5 and block 14 also contributes to reducing the swing resistance of the axle 1.

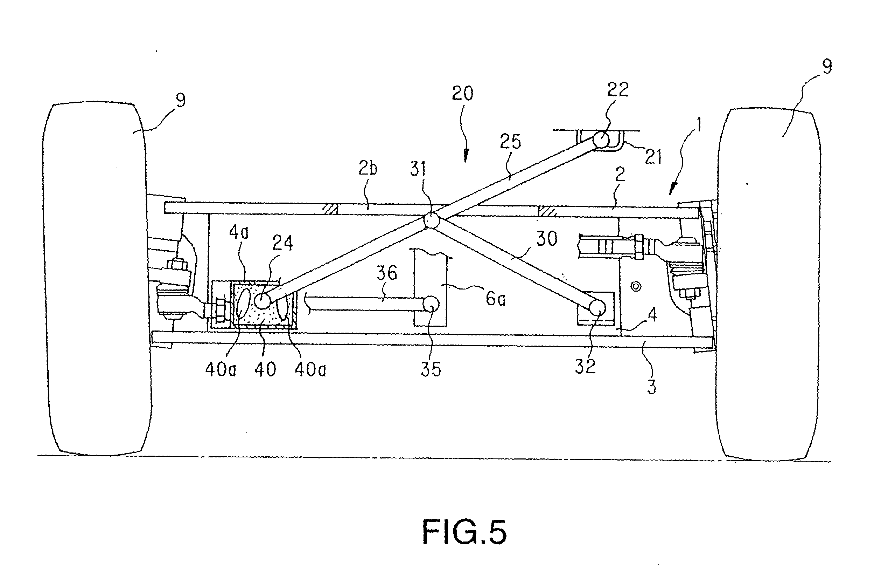

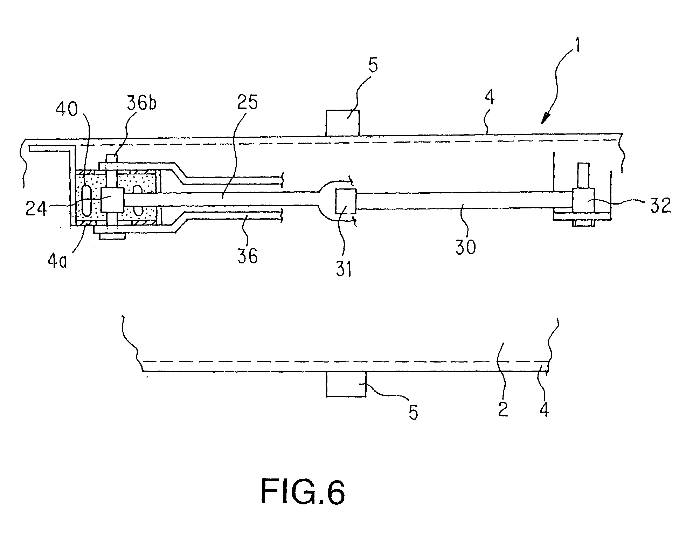

Figs. 5 and 6 are different from Figs. 1 to 4 in that the position of the control link 20 is lowered and part of it is located inside the axle 1.

Although not shown, the axle 1 is connected to the vehicle frame 6 by the front/rear links 11, 12 in the same way as in Fig. 2. The front/rear position of the axle 1 and turning position around the yaw axis are restricted, and the vertical position of the axle 1 and turning position of the vehicle around the axis in the left/right directions are restricted by inserting the swing axis 5 of the axle 1 in the slot 7 of the vehicle frame 6 in the same way as in Fig. 1.

The positional relationships of the first to third links 25, 30, 36 shown in Fig. 5 are identical to those of Fig. 1, and the connecting point 24 of the first link 25 to the axle 1 is connected so that it is free to displace horizontally relative to the connecting member 4 of the axle 1. A pin 36b which connects the first link 25 and third link 36 is disposed in a cylindrical part 4b fixed to the connecting member 4. Elastic (e.g., rubber) members 40 having holes 40a are inserted on both sides of the pin 36b in the cylindrical part 4b so as to allow movement of the pin 36b to the left and right.

The connecting point 35 of the third link 36 is connected to the supporting member 6a connected to the vehicle frame 6.

As shown in Fig. 6, the third link 36 is formed of a pair of parallel links, the first link 25 being inserted between them, and these links are joined together by the pin 36b at the connecting point 24. The connecting point 32 of the second link 30 is connected to the connecting member 4 of the axle 1 so that it is free to rotate.

A large opening 2b is provided in the upper member 2 of the axle 1 so as to allow accepting the first, second links 25, 30 and the end part of the supporting member 6a of the vehicle frame 6.

The swing axis 5 of the axle 1 is supported free to move in a horizontal direction relative to the supporting member 6a part of the vehicle frame 6, as described above.

In this construction, the position of the control link 20 moves down, therefore the layout, such as existing positional relationships of the vehicle frame 6 and axle 1, does not need to be greatly modified.

The left and right movement of the connecting point 24 of the first, third links 25, 36 is performed while compressing the elastic members 40, so shocks and vibrations are absorbed, and the motion is smooth.

Elastic members 40 for mitigating shocks having an identical construction to the above may be interposed at the connecting point 22 between the first link 25 and vehicle frame 6.

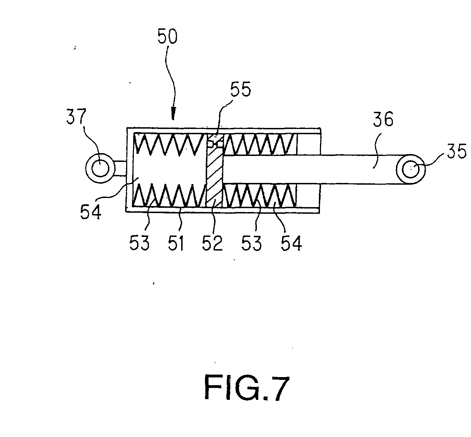

As a means of mitigating shocks, a damper 50 such as shown in Fig. 7 can also be incorporated in the third link 36 or second link 30. Specifically, in Fig. 7, the third link 36 is divided in the axial direction, one part comprising a cylinder 51 and the other part connected to a piston 52 sliding inside the cylinder 51, a spring (plate spring or the like) 53 is disposed on both sides of the piston 52, and contraction or extension is performed according to the impact in the axial direction acting on the third link 36.

The contraction or extension stroke varies according to the magnitude of the impact load, and when the impact force disappears, the piston 52 is immediately pushed by the spring 53 back to the neutral position.

When there is a vibration input which cannot be absorbed by the spring 53 alone, the cylinder 51 may be filled with a damping fluid 54 and a damping orifice 55 provided in the piston 52 to attenuate the vibration input.

As the second link 30 or third link 36 can extend and contract, this shock can be absorbed by the extension/contraction of the second link 30 and third link 36 even if a shock such as a kickback acts to the left and right of the axle 1 from stones, etc, on the road surface. Therefore, damage of the first link 25 is prevented, and an upward pushing or downward pulling impact is prevented from acting on the vehicle frame 6 from the first link 25.

Further, as a damper mechanism is provided which restricts the extension/contraction of the second link 30 and/or third link 36, the vibration of the first to third links 25, 30, 36 is suppressed, and vibration of the vehicle frame 6 or axle 1 connected to these links is also suppressed.

The damper is not limited to this construction, and any damper known in the art may be employed.

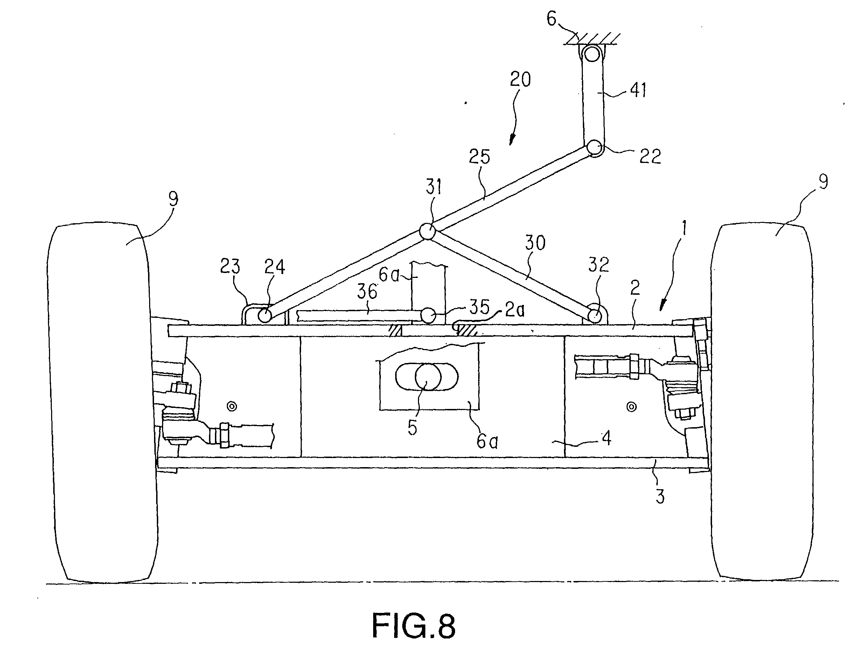

The embodiment shown in Fig. 8 is a modification of the embodiment of Fig. 1.

Instead of the connecting point 22 between the first link 25 and vehicle frame 6 being made to slide in the slot 21 in the vehicle frame 6, the first link 25 and vehicle frame 6 are connected by a perpendicular connecting link 41 joined by pins.

Therefore, the overall action of the control link 20 is identical to that of the example of Fig. 1, but as the connecting link 41 is used, sliding resistance between the vehicle frame 6 and first link 25 is eliminated, and the motion is made smooth.

Although not shown, the site to which the connecting link 41 may be connected, can also be applied to the connection between the connecting point 24 of the first, third links 25, 36 and the axle 1. In this case, if a damper bar is provided which opposes the vibration of the connecting link, shocks can be mitigated in the same way as in Fig. 4.

The connecting link 41 may also be oriented in a downward direction from the connecting point 22 of the first link 25, and connected to the vehicle frame 6. This contributes to lowering the vehicle body.

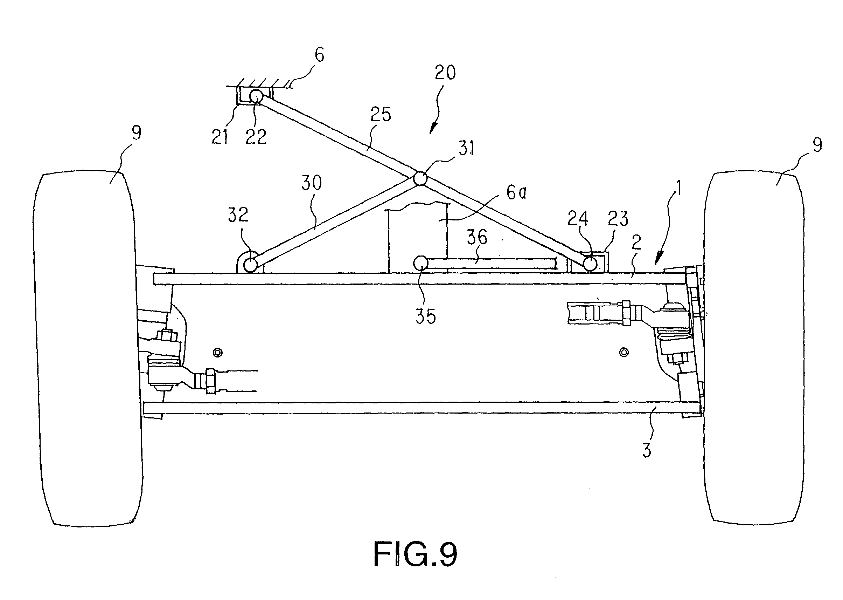

In the embodiment shown in Fig. 9, the control link 20 is disposed with left and right reversed compared to the example shown in Fig. 1, the remaining features of the construction being identical to those of Fig. 1. In this example, the same effect is obtained as that of Fig. 1.

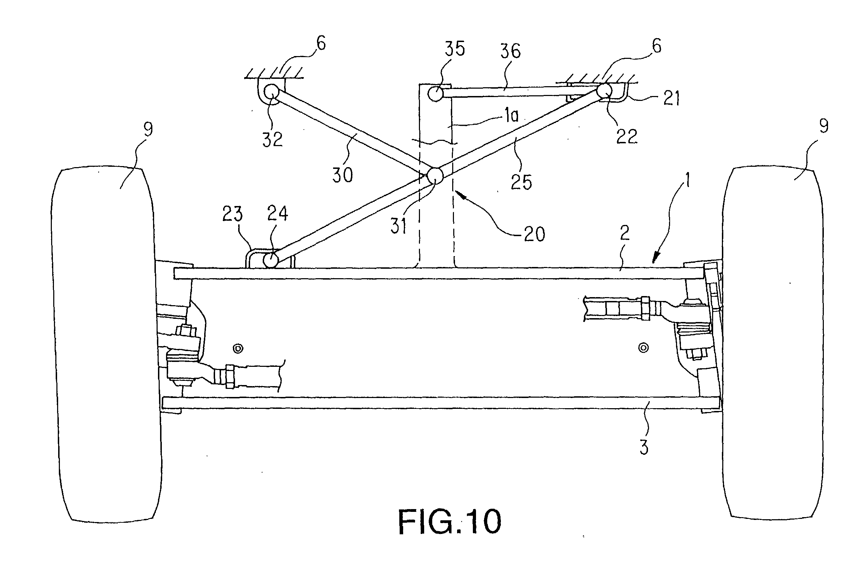

In the embodiment shown in Fig. 10, the control link 20 is disposed with top and bottom reversed compared to the example shown in Fig. 1.

In Fig. 10, the position of the first link 25 of the control link 20 is not changed, but the second link 30 extends toward the vehicle frame 6 from the middle of the first link 25, and it joins the vehicle frame 6 on the opposite side of the center of the vehicle to the connecting point 22 of the first link.

One end of the third link 36 is connected to the connecting point 22 of the first link 25, and the other end is connected to a supporting part 1a extending above the axle 1.

In this control link 20, as the third link 36 is connected to the supporting part 1a formed in one piece with the axle 1, when the vehicle frame 6 displaces in a lateral direction due to centrifugal force, etc., relative to the axle 1, the connecting point 22 of the first link 25 on the side of the vehicle frame 6 is pushed or pulled. Since the middle part of the first link 25 is connected to the second link 30 which is connected to the vehicle frame 6, the inclination angle of the first link 25 changes due to this pushing and pulling force.

Although not shown, the swing axis 5 is supported relative to the vehicle frame 6 in an identical way to that described above.

As a result, tilt of the vehicle body is suppressed and vehicle running is stabilized due to the effect of the control link 20, as in the case of Fig. 1.

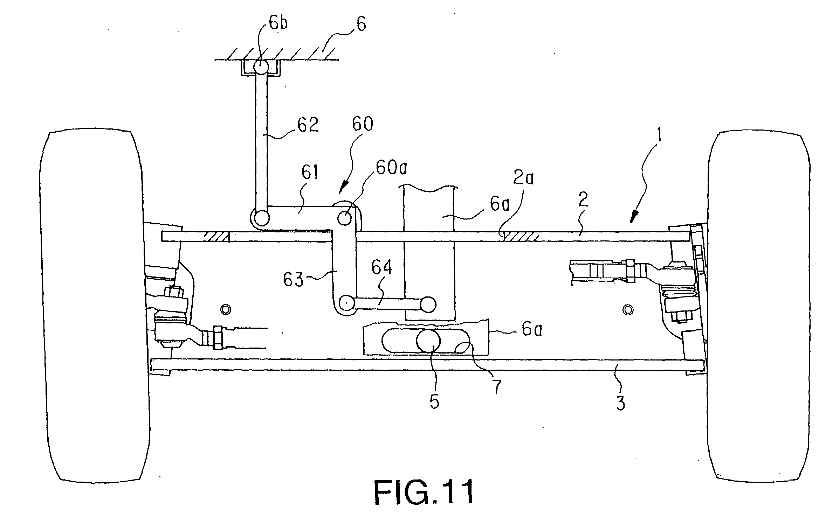

Fig. 11 is a rear view showing a second embodiment of the invention wherein a bell crank is provided on the axle to convert the lateral displacement of the vehicle frame to a vertical displacement. This will be described assigning identical numerals to the same parts as those of Fig. 1.

In Fig. 11, 60 is a bell crank provided free to rotate on a pin 60a on the axle 1. A horizontal arm 61 of the bell crank 60 is joined to the vehicle frame 6 via a vertical link 62, and a vertical arm 63 of the bell crank 60 is joined to an end of the supporting member 6a which extends downwards from the vehicle frame 6 via a horizontal link 64.

An end 6b of the link 62 is connected free to slide in a long hole in the horizontal direction relative to the vehicle frame 6.

The supporting member 6a extending downwards from the vehicle frame 6, projects downwards through a hole 2a provided in the upper frame 2 of the axle 1.

The swing axis 5 of the axle 1 is inserted in the slot 11 in the lateral direction of the vehicle frame 6 in the same way as in Fig. 1, thereby restricting the vertical position and turning position of the axle 1 around the left or right axis, and front/rear motion and turning in the yaw direction of the axle 1 is restricted by the front/rear link, as in Fig. 1.

Therefore, when the vehicle is on a road which slopes to the left or right, or is affected by centrifugal force, and the vehicle frame 6 displaces to the left or right relative to the axle 1, the displacement is transmitted to the vertical arm 63 of the bell crank 60 via the horizontal link 64 connected to the supporting member 6a. The bell crank 60 then pivots around the pin 60a, and the horizontal arm 61 pushes or pulls the vertical link 62. Due to this pushing or pulling, the vehicle frame 6 is pushed up or pulled down, and the tilt of the vehicle is suppressed as in the aforesaid embodiment.

If for example a force in the left directions of the figure acts on the vehicle due to centrifugal force while it is turning, the bell crank 60 rotates in a clockwise direction, the link 62 pushes the vehicle frame 6 upwards, and tipping over of the vehicle is suppressed.

When the wheels 9 run over bumps or run on a bad road, and the axle 1 swings, a change in the posture of the vehicle is suppressed due to the displacement of the pivot point of the bell crank 60. For example, if the right wheel 9 rides over a bump, the vehicle body inclines to the left, but the axle 1 displaces to the right, the bell crank 60 rotates in a clockwise direction, and the link 62 pushes the left of the vehicle frame 6 upwards. Consequently, the tipping over of the vehicle is suppressed.

The aforesaid elastic member may also be disposed at the connecting point 6b of the link 62 and vehicle frame 6 so as to absorb vibrations and shocks.

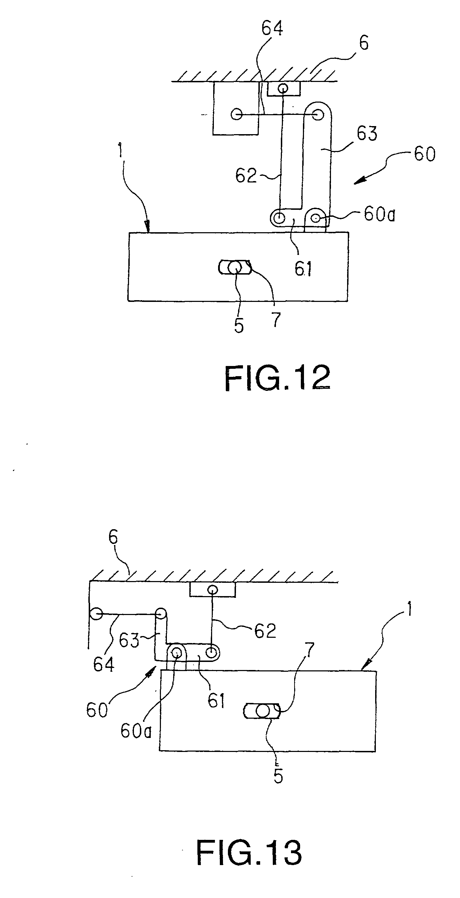

In the example shown in Fig. 12, the vertical arm 63 extending upwards from the pivot point of the bell crank 60 and connected to the vehicle frame 6 by the horizontal link 64, and the horizontal arm 61 extending horizontally from the pivot point 60a and connected to the vehicle frame 6 by the vertical link 62, are provided.

When the vehicle frame 6 displaces to the left or right due to centrifugal force resulting from a turn or a sloping road, a vertical force acts on the vehicle frame 6 via the horizontal link 64, bell crank 60 and vertical link 62 as described above.

In Fig. 13, the only difference from Fig. 12 is that the part of the vehicle frame 6 situated in the lateral direction and the vertical arm 63 of the bell crank 60 provided on the axle 1 are connected by the horizontal link 64, the remaining features being identical to those of Fig. 12.

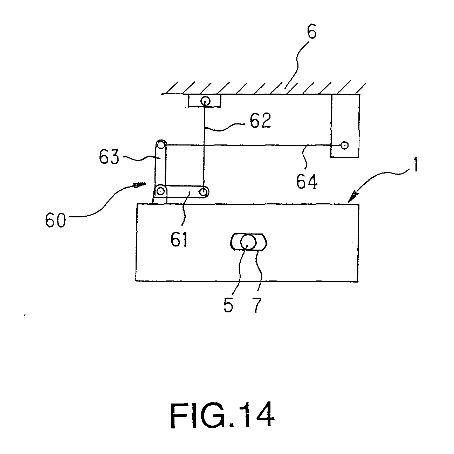

In Fig. 14, the vertical link 62 and horizontal link 64 cross when viewed from the rear of the vehicle, and the length of the horizontal link 64 is made longer. The effect is identical to that of Fig. 12.

In the example shown in Fig. 11 to Fig. 14, the construction was described where the bell crank 60 was disposed on the side of the axle 1, but the invention is not limited to this example. The bell crank 60 may also be disposed free to swing in the vehicle frame 6, the vertical link and horizontal link being interposed with the axle 1 whereupon an identical effect is obtained.

In the arrangement shown in Fig. 11 to Fig. 14, the vehicle frame 6 is free to displace to the left and right relative to the axle 1, the left/right displacement of the vehicle frame 6 is detected by the horizontal link 64 acting as a detecting member, and the bell crank 60 and vertical link 62 which are working members apply a force tending to tilt the vehicle frame 6 to the rear of the displacement direction. Hence, when the vehicle turns, a restoring moment is generated opposite to the roll moment due to this force, and the vehicle is prevented from tilting outside the turn.

During this turn, as the tilt of the vehicle outside the turn is suppressed, the vehicle does not tilt too much outside the turn even if the inner wheel rides over a projection during the turn, so the vehicle is stabilized and the operator experiences a sense of stability and relief.

Even on a road which slopes to the left or right, the horizontal link 64, which is a detecting member, detects the displacement of the vehicle frame 6 on the downward slope relative to the axle 1, and the bell crank 60 and vertical link 62 which are working members cause the vehicle frame 6 to tilt towards the rear of the displacement direction, so the tilt of the vehicle down the slope is suppressed and the vehicle posture is stabilised which also give the operator a sense of stability and relief.

Further, a vertical load is supported on the axle 1 via the swing axis 5 from the vehicle frame 6, so the load acting on the horizontal link 64, vertical link 62 and bell crank 60 can be reduced, and as these elements do not have to be made rigid, costs can be made more economical.

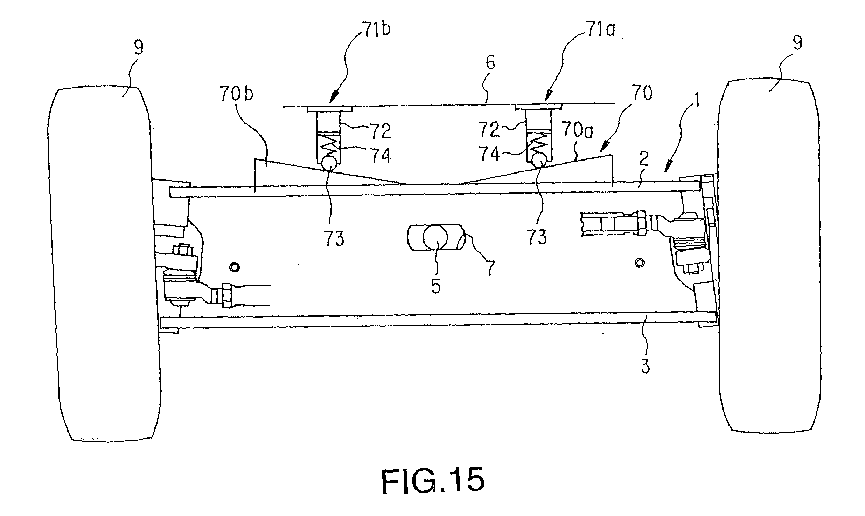

Fig. 15 shows a third embodiment of this invention.

Herein, the restoring moment from the axle 1 to the vehicle frame 6 is increased according to the lateral displacement of the vehicle frame 6. This will be described assigning identical numerals to the same parts as those of Fig. 1.

In Fig. 15, a guide surface 70 is provided whereof, as one of the axle 1 and vehicle frame 6 (in this example, the axle 1) moves away from the center of the vehicle, the other approaches it, and two elastic members 71a, 71b are provided which slide on this guide surface 70 on the other of the two elements (in this example, the vehicle frame 6).

The guide surface 70 provided on the upper surface of the axle 1 comprises inclined surfaces 70a, 70b which are symmetrical about the swing axis 5.

The elastic members 71a, 71b comprise a spherical member 73 guided by a cylindrical member 72 fixed perpendicular to the vehicle frame 6, and a spring 74 which pushes the spherical member 73 towards the rear surface. When the axle 1 swings about the swing axis 5, the spherical member 73 is allowed to move so that it does not interfere even if the guide surface 70 approaches.

Although not shown, the axle 1 is connected to the vehicle frame 6 by the front/rear links 11, 12 as in Fig. 2, thereby restricting the front/rear position and turning position around the yaw axis of the axle 1. The vertical position and turning position of the axle 1 around the left and right axis are restricted by inserting the swing axis 5 of the axle 1 in the slot 7 in the lateral direction of the vehicle frame 6, as in Fig. 1.

When a centrifugal force is generated due to the turning of the vehicle and the vehicle frame 6 for example displaces to the right of the figure, the inclined surface 70a with which the right-hand elastic member 71a is in contact becomes higher due to the displacement, and the inclined surface 70b with which the left-hand elastic member 71b is in contact becomes lower. Due to the centrifugal force, the vehicle body tilts to the right, but the right-hand elastic member 71a pushes the vehicle body upwards, a restoring force acts, and the tilt of the vehicle body is suppressed.

When the centrifugal force acts in the opposite direction, the left-hand elastic member 71b rides over the sloping surface 70b, so the tilt of the vehicle to the left is suppressed by the upward pushing force of the left-hand elastic member 71b.Also, when the vehicle wheels 9 ride over bumps and the vehicle travels on a road surface with imperfections, when the axle 1 displaces due to the force component in the axle direction generated according to the tilt of the axle 1, the positions of the elastic members 71a, 71b change relative to the guide surface 70, and the posture is adjusted so that the tilt of the vehicle is suppressed as described above.

When the vehicle is travelling on a road surface with small imperfections, the swing of the rear wheel axle 1 is tolerated by the elastic member, so the tracking of the wheels on the road surface is enhanced, shocks are mitigated and the comfort of driving is improved.

The characteristics of vehicle posture control may also be varied by increasing the tilt angle of the guide surface 70.

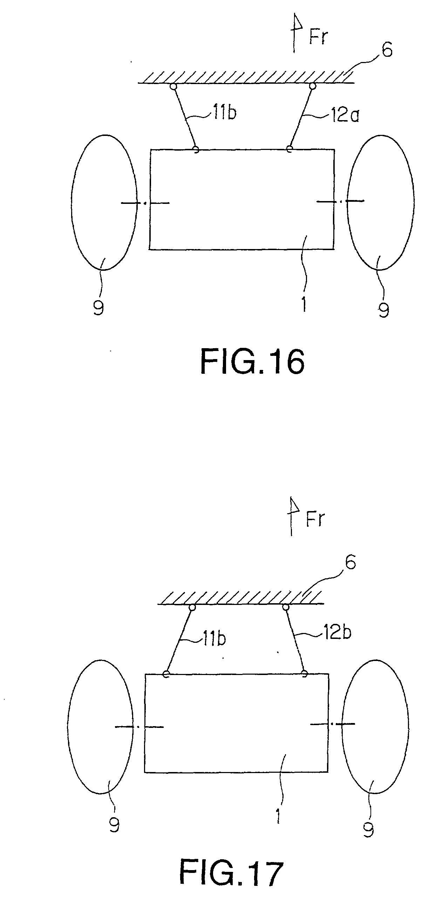

Next, Fig. 16 shows an embodiment wherein the front/rear links connect the axle 1 to the vehicle frame 6.

In Fig. 16, in the front/rear links 11a, 12a, the interval between the connecting points of the front link to the vehicle frame 6 is larger than the interval between the connecting points to the axle 1.

As a result, when the vehicle frame 6 displaces outside based on the turn, a pulling force acts on the front/rear link which is situated on the outside of the turn, and a compressing force acts on the front/rear link situated on the inside of the turn. Consequently, a moment around the yaw (yawing) axis is supplied to the axle 1 within a horizontal plane.

If the vehicle turns to the left, this yawing moment of the axle 1 is in an anticlockwise direction, and if the vehicle turns to the right, it is in a clockwise direction. In both cases, the wheel 9 on the steering side may be rotated inside the turn, so the vehicle can be understeered, and forward stability of the vehicle is improved.

This disposition of the front/rear links 11a, 12a may be applied to any of the embodiments shown in Fig. 1 to Fig. 15.

Fig. 17 shows a different layout from the layout shown in Fig. 16.

In front/rear links 11b, 12b, the interval between the connecting points of the former to the vehicle frame 6 is less than the interval between the connecting points to the axle 1.

Consequently, the vehicle frame 6 can be displaced outside based on the turn, a compressing force acts on the front/rear link on the outside of the turn, a pulling force acts on the front/rear link on the inside of the turn, and a moment around the yaw axis opposite to that of Fig. 16 is supplied to the axle 1 in a horizontal plane.

Specifically, if the vehicle turns to the left, this yawing moment of the axle 1 is in a clockwise direction, and if the vehicle turns to the right, it is in an anticlockwise direction. In both cases, the wheel 9 on the steering side can be rotated outside the turn, so the vehicle can be understeered, and the turning characteristics and small radius turning of the vehicle are improved.

This disposition of the front/rear link 11b or 12b can be applied to any of the embodiments shown in Fig. 1 to Fig. 15, whereupon the above effect is again obtained.

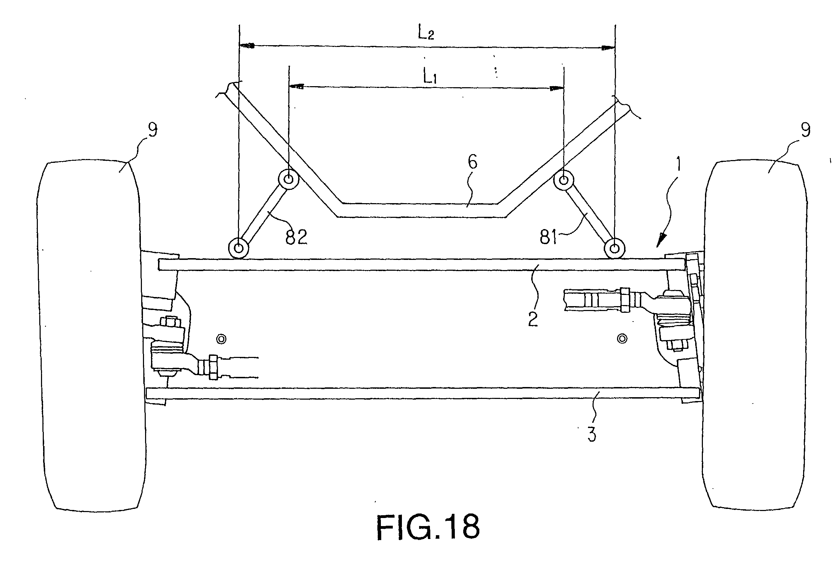

Fig. 18-Fig. 20 show a fourth embodiment of this invention.

Herein, the axle 1 and vehicle frame 6 are joined by two links disposed in a trapezoid arrangement. Identical numerals are assigned to the same parts as those of Fig. 1.

In Fig. 18, the vehicle frame 6 and axle 1 are connected by a pair of left/right links 81, 82 disposed in a vertical direction, the connecting points being free to rotate. The links 81, 82 are disposed symmetrically to the left and right of the vehicle center, and fixed so that they are inclined to one another on mutually opposite sides.

If the interval between the connecting points of the links 81, 82 on the side of the vehicle frame 6 is L1, and the interval between the connecting points on the side of the axle 1 is L2, L1<L2.

Although not shown, these links 81, 82 are flat links having a longer width in the front/rear direction, or are four links arranged in pairs in the front/rear direction. The swing axis 5 of the axle 1 of the aforesaid embodiments is omitted, and the vehicle frame 6 is supported on the axle 1 only by the left/right links 81, 82.

In this construction, by supporting the vehicle frame 6 on the front wheel side without any tilt, the left/right links 81, 82 rising from the rear wheel axle 1 can be supported on the rear wheel axle 1 symmetrically inclined towards the center of the vehicle.

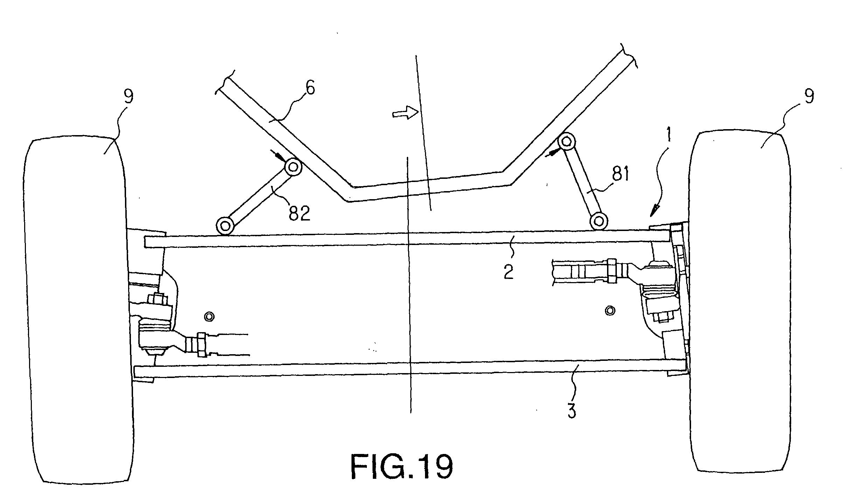

When the vehicle is on a road surface sloping to the left or right or is subjected to a centrifugal force on a turn, and for example displaces to the right, this displacement rotates the links 81, 82 in a clockwise direction. Hence, the right-hand link 81 ascends while the left-hand link 82 descends as shown in Fig. 19, so the right-hand side of the vehicle frame 6 is pushed up, and tilt of the vehicle towards right is suppressed.

When the vehicle frame 6 displaces to the left of the figure, the left-hand link 82 ascends, so the left-hand side of the vehicle frame is pushed up and the tilt of the vehicle body towards left is prevented.

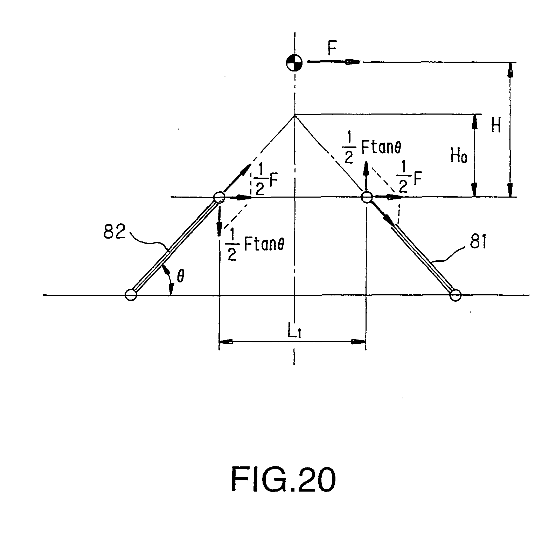

Here, the action during vehicle turning will be described referring to Fig. 20.

In the figure, a centrifugal force acts in the direction of the arrow *F*, the horizontal force due to the centrifugal force is *F*, and the point of action of this horizontal force *F* is the centre of gravity of the vehicle. The distance between the virtual rotation center where the center parts of the vehicle on the extrapolations of the left/right links 81, 82 intersect, and the ends of the left/right links 81, 82 is *HO*, the distance between the center of gravity and the ends of the left/right links 81, 82 is *H*, and the interval between the connecting points of the left/right links 81, 82 to the vehicle frame 6 is *L1*. Theta is the angle subtended by the links 81, 82 with the horizontal plane.

The roll moment when the horizontal force *F* in the right-hand direction acts on the center of gravity of the vehicle, will be described.

Horizontal forces *(F/2)* act respectively on the connecting points of the left/right links 81, 82 with the vehicle frame 6. Due to these horizontal forces, in the left-hand link 82, a force

$$(1/2)\, F \times \tan \theta$$

is produced which pulls the vehicle frame 6 downwards. In the right-hand link 81, a force

$$(1/2)\, F \times \tan \theta$$

is produced which pushes the vehicle frame 6 upwards.

The moment acting on the vehicle frame 6 due to these unequal forces is:

$$M1 = (1/2)F \times \tan \theta \times L1 \text{ (anticlockwise)}$$

The height H0 of the virtual rotation center of the axle 1 and due to the pair of left/right links 81, 82 is given by H0 = (1/2)tan theta x L1, so the moment M1 acting on the vehicle frame 6 may be rewritten as:

$$M1 = F \, x \, H0 \text{ (anticlockwise).}$$

Also, the roll moment due to centrifugal force acting on the centre of gravity is:

$$M2 = F \times H \text{ (clockwise).}$$

From the above, due to the relation between the height *H0* of the virtual rotation center and the height *H*, when the centrifugal force is acting and the height *H* of the center of gravity of the vehicle is lower than *H0* of the virtual rotation center of the axle 1, the vehicle inclines inwards, and when the height *H* of the center of gravity of the vehicle is greater than H0 of the virtual rotation center of the axle 1, the vehicle inclines outwards.

However, in both cases, a restoring moment **M** which opposes the roll moment due to the centrifugal force is produced, so the effect of the roll moment can be mitigated.

In this example, left/right characteristics are symmetrical, and high compatibility with the layout of the vehicle frame 6 and axle 1 of a fork lift truck can be achieved by a simple construction.

The left/right links 81, 82 were disposed with the axle 1 downwards and the vehicle frame 6 upwards, but part of the vehicle frame 6 may be disposed in the part below the axle 1, and the vehicle frame 6 suspended below the axle 1. In this case, the positional relationships of the left/right links 81, 82 is the same, and an identical effect to that of the above example is obtained by making the interval **L2** between the connecting points on the axle 1 side less than the interval **L1** between the connecting points on the vehicle frame 6 side.

The entire contents of Japanese Patent Application P2000-321287(filed October 20, 2000) and P2000-373879(filed December 8, 2000) are incorporated herein by reference.

This invention is not limited to the above embodiments, various modifications being possible by those skilled in the art within the scope of the appended claims.

**Claims**

1. An axle supporting structure for industrial vehicles, comprising:

   an axle(1) supporting wheels(9), the axle(1) being supported free to swing in its center part relative to the vehicle frame(6) and free to displace in the left and right directions, a first link(25), one end(24) of the first link(25) being connected to the axle(1) so that it is free to displace in the left and right directions of the vehicle, the other end being connected to the vehicle frame(6) so that it is free to displace in the left and right directions of the vehicle, and the link(25) being inclined, a second link(30), one end(31) of the second link(30) being connected to the vicinity of the middle point of the first link(25), the other end (32) being connected to one of the axle(1) and vehicle frame(6), and the link(30) being inclined, and a third link(36), one end(37) of the third link(36) being connected to the other end(24) of the first link(25), its other end(36) being connected to one of the vehicle frame(6) and the axle(1), and the link(36) being disposed substantially parallel to the axle(1), wherein:

   the inclination angle of the first link(25) varies according to the relative positions of the axle(1) and vehicle frame(6) to the left and right of the vehicle, and the vehicle posture is thereby controlled.

2. An axle supporting structure for industrial vehicles as defined in Claim 1, wherein a swing axis(5) which extends in the front and rear directions of the vehicle is provided on the axle(1), and the swing axis(5) is inserted into a slot(7) extending in the left and right directions of the vehicle body provided in the vehicle frame(6).

3. An axle supporting structure for industrial vehicles as defined in Claim 1, wherein the other end(32) of the second link(30) connected to the first link(25) is connected to the axle(1), the other end(35) of the third link(36) connected to the first link(25) is connected to the vehicle frame(6), and the swing center of the axle(1) is disposed lower than the connecting sites of the first link(25) and second link(30) to the axle(1).

4. An axle supporting structure for industrial vehicles as defined in Claim 1, wherein the second link(30) or third link(36) extends and contracts in the axial direction.

5. An axle supporting structure for industrial vehicles as defined in Claim 1, wherein the second link(30) or third link(36) comprises a damper(50) mechanism which restricts the extension and contraction.

6. , An axle supporting structure for industrial vehicles as defined in Claim 1, wherein a connecting part between the upper end(22) of the first link(25) and the vehicle frame(6) or connecting part between the lower end(24) and the axle(1) is connected via an elastic member(40) which permits displacement in the left and right directions.

7. An axle supporting structure for industrial vehicles as defined in Claim 1, wherein a connecting part between the upper end(22) of the first link(25) and the vehicle frame(6) or a connecting part between the lower end(249 of the first link(25) and the axle(1) is connected to the vehicle frame(6) or the axle(1) via a vertical link(41) provided free to swing on the axle(1) or the vehicle frame(6).

8. An axle supporting structure for industrial vehicles as defined in Claim 1, wherein the other end(32) of the second link(30) connected to the first link(25), is connected to the vehicle frame(6), and the other end of the third link(36) connected to the first link(25), is connected to a supporting member(1a) formed in one piece with the axle(1).

**9.** An axle supporting structure for industrial vehicles, comprising:

> an axle(1) supporting wheels(9), the axle(1) being supported free to swing in its middle part relative to the vehicle frame(6), and free to displace in the left and right directions,
> a detecting member, this detecting member detecting the relative displacement of the vehicle frame(6) and axle(1) in the left and right directions, and
> a working member, the working member being connected to the axle(1) and the vehicle frame(6), and supplying a force which tilts the vehicle frame(6) according to the action of the detecting member, wherein:
>
>> the working member displaces via the detecting member according to the relative displacement of the axle(1) and the vehicle frame(6) in the left and right directions of the vehicle, and the posture of the vehicle is thereby controlled.

**10.** An axle supporting structure for industrial vehicles as defined in Claim 9, wherein:

> the working member is a bell crank(60) disposed free to swing on the axle(1) or vehicle frame(6), the crank connecting the vehicle frame(6) or axle(1) and a horizontal arm(61) by a vertical link(62), and
> the detecting member is a horizontal link(64) which connects the vertical arm(63) of the of bell crank(60), and the vehicle frame(6) or axle (1).

**11.** An axle supporting structure for industrial vehicles, comprising:

> an axle(1) supporting wheels(9), the axle(1) being supported free to swing in its center part relative to the vehicle frame(6) and free to displace in the left and right directions,
> a guide member(70), the guide member(70) being disposed in one of the axle(1) and vehicle frame(6), and comprising a pair of guide surfaces(70a,70b) incline so as to approach the other of these with increasing distance from the center of the vehicle, and
> a pair of the elastic members(71a,71b), the elastic members(71a,71b) being disposed in one of the vehicle frame(6) and axle(1), and sliding on the pair of guide surfaces(70a,70b), wherein:
>
>> the elastic members(71a,71b) displace along the guide surfaces(70a,70b) according to the relative displacement of the axle(1) and vehicle frame(6) to the left and right directions of the vehicle, and thereby control the posture of the vehicle.

**12.** An axle supporting structure for industrial vehicles as defined in any of Claims 1, 9 or 11, wherein the axle(1) is connected to the vehicle frame(6) by a pair of front and rear links(11,12) extending in the front and rear direction of the vehicle in the same horizontal plane.

**13.** An axle supporting structure for industrial vehicles as defined in Claim 12, wherein the pair of front and rear links( 11,12) are mutually parallel.

**14.** An axle supporting structure for industrial vehicles as defined in Claim 12, wherein, in the pair of front and rear links(11,12), the interval between the connecting points to the vehicle frame(6) is different from the interval between the connecting points to the axle(1).

**15.** An axle supporting structure for industrial vehicles, comprising:

> an axle(1) supporting wheels(9),
> a vehicle frame(6), and
> a pair of links(81,82) which connect the axle(1) and the vehicle frame(6), these links(81,82) being disposed symmetrically about the center of the vehicle and inclining symmetrically with respect to each other, wherein:
>
>> the pair of links(81,82) incline differently according to the relative displacement of the axle(1) and vehicle frame(6) in the left and right directions of the vehicle, and the posture of the vehicle is thereby controlled.

FIG.1

FIG.2

FIG.3

FIG.4

EP 1 199 195 A2

FIG.5

FIG.6

FIG.7

FIG.8

EP 1 199 195 A2

FIG.9

EP 1 199 195 A2

FIG.10

EP 1 199 195 A2

FIG.11

FIG.12

FIG.13

FIG.14

FIG.15

FIG.16

FIG.17

FIG.18

EP 1 199 195 A2

FIG.19

FIG.20